# EUROPEAN PATENT SPECIFICATION

(11) **EP 2 141 855 B1**
(45) Date of publication and mention of the grant of the patent: **27.08.2014**
(21) Application number: 09251656.6
(22) Date of filing: 26.06.2009
(51) Int. Cl.: H04L 12/18, H04L 29/06

(54) **Packet tagging for effective multicast content distribution**
Paketetikettierung zur effektiven Multicast-Inhaltsverteilung
Marquage de paquets pour distribution de contenu en multidiffusion

(30) Priority: 01.07.2008 US 165820
(43) Date of publication of application: 06.01.2010
(73) Proprietor: Sony Corporation, Tokyo 108-0075 (JP); Sony Electronics, Inc., Park Ridge, NJ 07656 (US)
(72) Inventor: Carpio, Fredrik, San Diego, California 92127 (US); Frazier, Milton Massey, San Marcos, California 92069 (US); Georgis, Nikolaos, San Diego, California 92128 (US)
(74) Representative: DeVile, Jonathan Mark

(56) References cited:
- EP-A2- 0 853 407
- US-A- 5 400 331

## Description

### I. Field of the Invention

The present invention relates to methods for transmitting packets, which include a packet header.

Embodiments of the present invention can provide a method for tagging network packets to indicate the type of content, data, or priority of the packet so that the packet may be prefiltered by a receiver prior to requiring a processor downstream of the receiver to process the packet.

### II. Background of the Invention

Networked devices such as computers can receive a great amount of data from the network. The processors of such devices clearly must process the data. As understood herein, much of the received data might not be required depending on the ambient usage of the device, but must nonetheless be processed by the receiving processor, and this is undesirable, particularly in the case of portable battery-powered devices. Background art is US-A-5400331 which relates to a communication network interface with screeners for incoming messages.

### SUMMARY OF THE INVENTION

Various aspects and features of the present invention are defined in the appended claims. In one aspect, the invention relates to a method as defined by independent claim 1.

The method includes, for at least some data packets to be transmitted over a network, determining a packet type. The packet type indicates one or more of data type, content type, and priority type. The method also includes generating a data element indicating the type, inserting the data element into a header of the packet, and transmitting the packet. A data element applies to plural packets.

The data type can be "video", "audio", or "binary application". In contrast, the content type can be TV data, movie data, advertisement data, or personal data. On the other hand, the priority type can be real time, high priority, medium priority, best effort priority. In any case, a receiver of the packet can be programmed to recognize data elements indicating packet types such that packets that are not desired by a processor of the receiver are screened from the processor, thereby relieving the processor of processing packets that the processor does not require.

In another aspect, the invention relates to an apparatus as defined by independent claim 6.

In another aspect, the invention relates to a tangible computer readable medium as defined by independent claim 8.

### BRIEF DESCRIPTION OF THE DRAWINGS

The details of the present invention, both as to its structure and operation, can best be understood in reference to the accompanying drawings, in which like reference numerals refer to like parts, and in which:
Figure 1 is a block diagram of an example network device with filtering receiver;
Figure 2 is a flow chart of example logic that can be implemented by the system of Figure 1; and
Figure 3 is a schematic diagram of an example packet in accordance with present principles.

### DETAILED DESCRIPTION OF THE PREFERRED EMBODIMENT

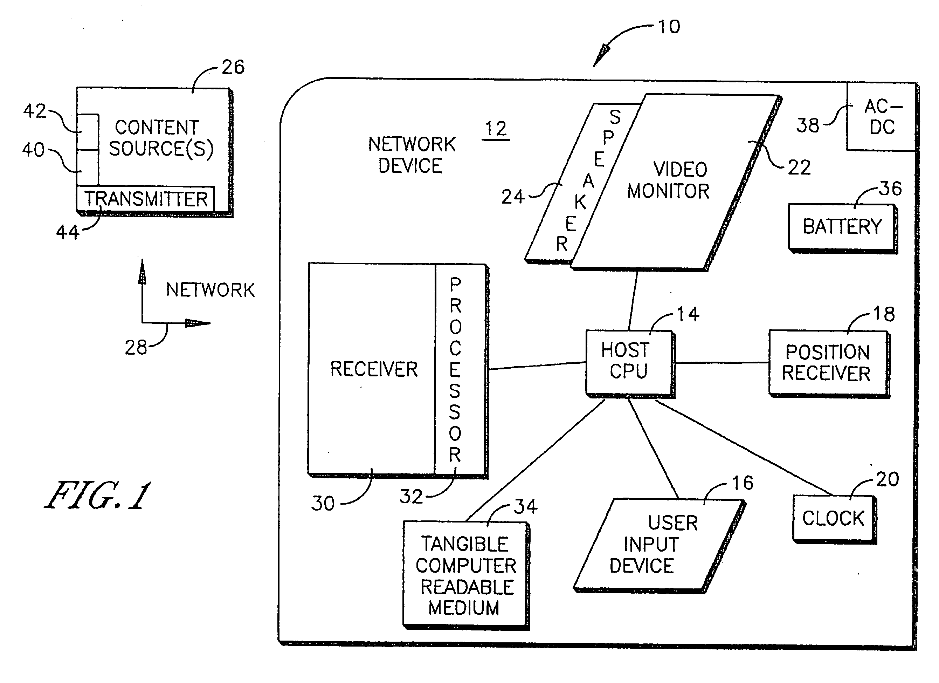

Referring initially to Figure 1, a network device 10 may have a lightweight portable housing 12 containing a host central processing unit (CPU) 14 that can be implemented by, e.g., a suitable computer processor. The CPU 14 can receive user input from a user input device 16, such as but not limited one or more of a keyboard, mouse, keypad, trackball, voice recognition module, etc. The CPU 14 may also receive, in some embodiments, position input from a position receiver 18 such as but not limited to a global positioning satellite (GPS) receiver, and from a clock 20. The CPU 14 may output video data on a monitor 22 such as a computer monitor, flat panel display, or even cathode ray tube or other monitor. The CPU 14 can also output audio data on one or more speakers 24.

As shown in Figure 1, the CPU 14 may receive data from content source(s) 26 over a network 28 such as but not limited to the Internet by means of a data receiver 30 with receiver processor 32. The receiver 30 may be a wired or wireless receiver that receives data packets from the network 28, with the packets typically bearing tags indicating their data type as set forth more fully below. Thus, the receiver 30 may include, without limitation, a wired modem or a wireless modem that may receive Bluetooth signals or WiFi signals. The receiver 30 may be implemented as a receiver module or integrated circuit, for example.

The CPU 14 may access a tangible computer readable storage medium 34 to store data thereon and to access computer instructions stored thereon. The medium 34 may represent, without limitation, any one or a combination of solid state storage, disk storage, removable and non-removable storage, etc.

As shown in Figure 1, the components of the network device 10 may be powered by one or more direct current (DC) batteries 36, for portability. The network device 10 may also receive alternating current (AC) power from the AC grid through an AC-DC converter 38. In nonlimiting implementations the network device 10 may be implemented as a portable computer such as a laptop or notebook computer, a personal digital assistant, or a wireless telephone.

Figure 1 further shows that the content source 26 can include a source processor 40 accessing a source tangible computer readable storage medium 42 to store data thereon and to access computer instructions stored thereon to execute the logic herein. The medium 42 may represent, without limitation, any one or a combination of solid state storage, disk storage, removable and non-removable storage, etc. The source processor 40 can control a data transmitter 44 to send packets of data over the network 28. The data transmitter 44 can be any suitable network data transmitter such as a modem, broadcast transmitter, etc.

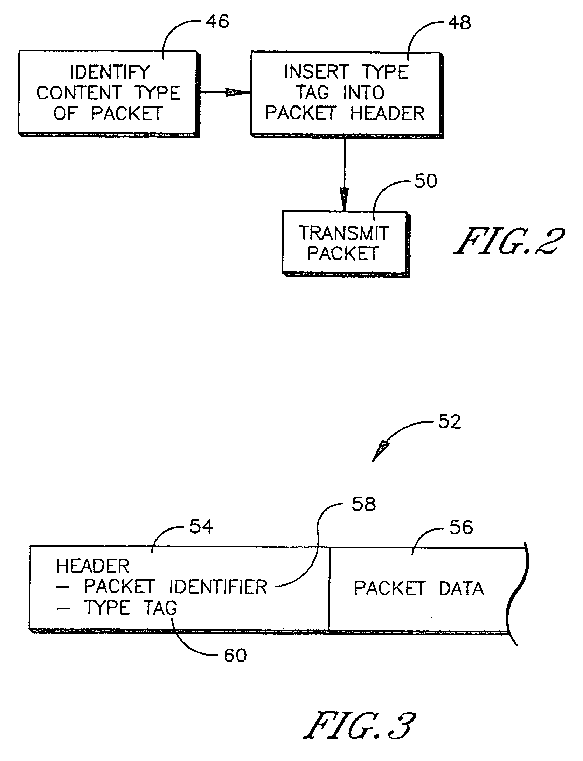

Figure 2 illustrates logic that may be employed at least in part by the content source 26 shown in Figure 1. Commencing at block 46, for each packet to be transmitted the packet type is determined. This determination may be made by the source processor 40 or by a prior system that provides data to the source 40.

"Type" generally refers to data type, content type, and priority type. By way of example, if the content is video data, the data type would be "video data". In contrast, if the content is a software program, the data type may be "binary application". Yet again, a "content" type that might be associated with the packet can include TV data, movie data, advertisement data, or personal data. Examples of packet priority type include real time, high priority, medium priority, best effort priority, etc. The type determinations are made automatically by the source processor 40 based on characteristic data patterns in the packet. A packet may be designated with more than one type, e.g., a packet may be identified by both data type and content type or indeed by all three types, i.e., by data, content, and priority type.

Once the type(s) for the packet is determined, a data element, referred to herein as a "tag", that designates the type(s) is generated and inserted into the header of the packet at block 48. A tag applies to a group of packets in sequence, with the number of packets to which the tag applies being indicated as part of the tag. The packet is then transmitted at block 50.

It is contemplated herein that network devices 10 that are programmed to recognize type tags in packets can quickly and easily decode the tags at their receiver to screen packets that might not be desirable from the main CPU 14 of the device. In this way, the CPU is relieved of processing packets that it might not require. Certain packet types such as, for example, emergency packet types might always be sent to the main CPU 14. The main CPU 14 may in effect command the receiver processor 32 to send to the main CPU 14 only packets of a certain type or types.

Figure 3 shows a packet 52 that can include a header 54 and a packet body 56 containing packet data. The header 54 may include a packet identifier 58 and a type tag 60 that, in accordance with principles above, indicates the type of content in the packet body 56 and/or the type of data in the packet body 56 and/or the type of priority associated with the data in the packet body 56.

While the particular PACKET TAGGING FOR EFFECTIVE MULTICAST CONTENT DISTRIBUTION is herein shown and described in detail, it is to be understood that the subject matter which is encompassed by the present invention is limited only by the claims.

Various aspects and features of the present invention are defined in the appended claims.

Various combinations of the features and method steps may be made of the features and method steps defined in the appended claims other than those explicitly recited by the claim dependency.

Embodiments of the present invention also include an apparatus comprising a transmitter of network data in packets having headers; and a processor controlling the transmitter to send packets with packet type tags in their headers to indicate to a receiver the data type, content type, or priority type of the packet so that packets that are not required by a host processor associated with the receiver are screened by the receiver, relieving the host processor of the processing of packets it does not need.

In the apparatus according to the above clause, the packet type may indicate "video", "audio" or "binary application".

In the apparatus according to the above clause, the packet type may indicate TV data, movie data, advertisement data, or personal data.

Further embodiments of the present invention may also include a tangible computer readable medium storing a data structure comprising a data packet body bearing data usable by a computer; and a data packet header including at least one packet identification and at least one packet type tag usable by a receiver to screen the packet.

According to the above clause, the packet type tag may indicate "video", audio" or "binary application".

According to the above clause, the packet type tag may indicate TV data, movie data, advertisement data or personal data.

## Claims

1. A method comprising:
for at least some data packets to be transmitted over a network (28), determining a packet type, the packet type indicating one or more of data type, content type, and priority type;
generating a data element (60) indicating the type;
inserting (48) the data element (60) into a header (54) of the packet (52); and
transmitting (50) the packet (52),
the method **characterised in that**:
the packet type determination is based on characteristic data patterns within the data packets;
a data element (60) applies to plural packets which are in a sequence; and
a number of packets in the sequence to which the data element (60) applies is indicated as part of the data element (60).

2. The method of Claim 1, wherein the data type is "video", "audio", or "binary application".

3. The method of Claim 1, wherein the content type is TV data, movie data, advertisement data, or personal data.

4. The method of Claim 1, wherein the priority type is real time, high priority, medium priority, best effort priority.

5. The method of Claim 1, wherein a receiver (30) of the packet is programmed to recognize data elements indicating packet types such that packets that are not desired by a processor of the receiver are screened from the processor, thereby relieving the processor of processing packets that the processor does not require.

6. Apparatus, comprising:
a transmitter (44) of network data in packets (52) having headers (54); and
a processor operable to control the transmitter to send packets with packet type tags in their headers to indicate to a receiver (30) the data type, content type, or priority type of the packet (52) so that packets that are not required by a host processor (14) associated with the receiver are screened by the receiver, relieving the host processor (14) of the processing of packets it does not need,
the apparatus **characterized in that**:
the packet type tag is determined based on characteristic data patterns within the data packets;
a tag (60) applies to plural packets which are in a sequence; and
a number of packets in the sequence to which the tag (60) applies is indicated as part of the tag (60).

7. The apparatus of Claim 6, wherein the packet type indicates real time, high priority, medium priority, best effort priority.

8. A tangible computer readable medium storing a data structure comprising:
a data packet body (56) bearing data usable by a computer; and
a data packet header (54) including at least one packet identification (58) and at least one packet type tag (60) usable by a receiver to screen the packet,
**characterized in that**:
the packet type tag is determined based on characteristic data patterns with the data packet;
a tag (60) applies to plural packets which are in a sequence; and
a number of packets in the sequence to which the tag (60) applies is indicated as part of the tag (60).

9. The medium of Claim 8, wherein the packet type tag (60) indicates real time, high priority, medium priority, best effort priority.

## Patentansprüche

1. Verfahren, das Folgendes umfasst:
Bestimmen für wenigstens einige Datenpakete, die über ein Netz (28) übertragen werden sollen, eines Pakettyps, wobei der Pakettyp einen Datentyp und/oder einen Inhaltstyp und/oder einen Prioritätstyp angibt;
Erzeugen eines Datenelements (60), das den Typ angibt;
Einfügen (48) des Datenelements (60) in einen Nachrichtenkopf (54) des Pakets (52); und
Übertragen (50) des Pakets (52),
wobei das Verfahren **dadurch gekennzeichnet ist, dass**:
das Bestimmen des Pakettyps auf charakteristischen Datenmustern innerhalb des Datenpakets basiert;
ein Datenelement (60) auf mehrere Pakete, die sich in einer Folge befinden, angewendet wird; und
eine Anzahl von Paketen in der Folge, auf die das Datenelement (60) angewendet wird, als Teil des Datenelements (60) angegeben wird.

2. Verfahren nach Anspruch 1, wobei der Datentyp "Video", "Audio" oder "binäre Anwendung" ist.

3. Verfahren nach Anspruch 1, wobei der Inhaltstyp TV-Daten, Film-Daten, Anzeige-Daten oder persönliche Daten sind.

4. Verfahren nach Anspruch 1, wobei der Prioritätstyp Echtzeit, hohe Priorität, mittlere Priorität, bestmögliche Priorität ist.

5. Verfahren nach Anspruch 1, wobei ein Empfänger (30) des Pakets programmiert ist, Datenelemente, die Pakettypen angeben, zu erkennen, so dass Pakete, die von einem Prozessor des Empfängers nicht erwünscht sind, von dem Prozessor abgeschirmt werden, und dadurch den Prozessor vom Verarbeiten von Paketen, die der Prozessor nicht benötigt, entlastet.

6. Vorrichtung, die Folgendes umfasst:
einen Sender (44) von Netzdaten in Paketen (52), die Nachrichtenköpfe (54) aufweisen; und
einen Prozessor, der arbeitet, den Sender zu steuern, Pakete mit Pakettypkennzeichen in ihrem Nachrichtenkopf zu senden, um einem Empfänger (30) den Datentyp, Inhaltstyp oder Prioritätstyp des Pakets (52) anzuzeigen, so dass Pakete, die für einen Host-Prozessor (14), der am Empfänger zugeordnet ist, nicht erforderlich sind, durch den Empfänger abgeschirmt werden und dadurch der Host-Prozessor (14) vom Verarbeiten von Paketen, die er nicht benötigt, entlastet wird,
wobei die Vorrichtung **dadurch gekennzeichnet ist, dass**:
das Pakettypkennzeichen basierend auf charakteristischen Datenmustern innerhalb des Datenpakets bestimmt wird;
ein Kennzeichen (60) auf mehrere Pakete angewendet wird, die sich in einer Folge befinden; und
eine Anzahl von Paketen in der Folge, auf die das Kennzeichen (60) angewendet wird, als Teil des Kennzeichens (60) angegeben wird.

7. Vorrichtung nach Anspruch 6, wobei der Pakettyp Echtzeit, hohe Priorität, mittlere Priorität, bestmögliche Priorität angibt.

8. Materielles computerlesbares Medium, das eine Datenstruktur speichert, die Folgendes umfasst:
einen Datenpaketkörper (56), der Daten trägt, die durch einen Computer verwendet werden können; und
einen Datenpaketnachrichtenkopf (54), der wenigstens eine Paketkennung (58) und wenigstens ein Pakettypkennzeichen (60) enthält, das durch einen Empfänger verwendet werden kann, um das Paket abzuschirmen,
**dadurch gekennzeichnet, dass**
das Pakettypkennzeichen basierend auf charakteristischen Datenmustern mit dem Datenpaket bestimmt wird;
ein Kennzeichen (60) auf mehrere Pakete angewendet wird, die in einer Folge sind; und
eine Anzahl von Paketen in der Folge, auf die das Kennzeichen (60) angewendet wird, als Teil des Kennzeichens (60) angegeben wird.

9. Medium nach Anspruch 8, wobei das Paketkennzeichen (60) Echtzeit, hohe Priorität, mittlere Priorität, bestmögliche Priorität angibt.

## Revendications

1. Procédé, comprenant :
pour au moins certains paquets de données à transmettre sur un réseau (28), la détermination d'un type de paquet, le type de paquet indiquant un ou plusieurs types parmi un type de données, un type de contenu et un type de priorité ;
la génération d'un élément de données (60) indiquant le type ;
l'insertion (48) de l'élément de données (60) dans un en-tête (54) du paquet (52) ; et
la transmission (50) du paquet (52),
le procédé étant **caractérisé en ce que** :
la détermination du type de paquet est basée sur des schémas caractéristiques de données au sein des paquets de données ;
un élément de données (60) s'applique à plusieurs paquets formant une séquence ; et
un nombre de paquets dans la séquence auquel s'applique l'élément de données (60) est indiqué dans l'élément de données (60).

2. Procédé selon la revendication 1, dans lequel le type de données est "vidéo", "audio" ou "application binaire".

3. Procédé selon la revendication 1, dans lequel le type de contenu est des données de télévision, des données de film, des données de publicité ou des données personnelles.

4. Procédé selon la revendication 1, dans lequel le type de priorité est un temps réel, une haute priorité, une priorité moyenne, une priorité au mieux.

5. Procédé selon la revendication 1, dans lequel un récepteur (30) du paquet est programmé pour reconnaître des éléments de données indiquant des types de paquet pour faire en sorte d'écarter d'un processeur du récepteur des paquets que le processeur ne souhaite pas de manière à soulager le processeur du traitement de paquets dont il n'a pas besoin.

6. Appareil, comprenant :
un émetteur (44) de données en réseau par paquets (52) comportant des en-têtes (54) ; et
un processeur ayant pour fonction de commander l'émetteur pour lui faire envoyer des paquets dont les en-têtes contiennent des marqueurs de type de paquet pour indiquer à un récepteur (30) le type de données, le type de contenu ou le type de priorité du paquet (52) pour faire en sorte que le récepteur écarte des paquets dont un processeur central (14) associé au récepteur n'a pas besoin de manière à soulager le processeur central (14) du traitement de paquets dont il n'a pas besoin,
l'appareil étant **caractérisé en ce que** :
le marqueur de type de paquet est déterminé sur la base de schémas caractéristiques de données au sein des paquets de données ;
un marqueur (60) s'applique à plusieurs paquets formant une séquence ; et
un nombre de paquets dans la séquence auquel s'applique le marqueur (60) est indiqué dans le marqueur (60).

7. Appareil selon la revendication 6, dans lequel le type de paquet indique un temps réel, une haute priorité, une priorité moyenne, une priorité au mieux.

8. Support tangible lisible par ordinateur stockant une structure de données comprenant :
un corps de paquet de données (56) portant des données exploitables par un ordinateur ; et
un en-tête de paquet de données (54) comportant au moins une identification de paquet (58) et au moins un marqueur de type de paquet (60) exploitable par un récepteur pour écarter le paquet,
**caractérisé en ce que** :
le marqueur de type de paquet est déterminé sur la base de schémas caractéristiques de données au sein du paquet de données ;
un marqueur (60) s'applique à plusieurs paquets formant une séquence ; et
un nombre de paquets dans la séquence auquel s'applique le marqueur (60) est indiqué dans le marqueur (60).

9. Support selon la revendication 8, dans lequel l'étiquette de type de paquet (60) indique un temps réel, une haute priorité, une priorité moyenne, une priorité au mieux.
